# EUROPEAN PATENT APPLICATION

(11) **EP 4 667 780 A1**
(43) Date of publication of application: **24.12.2025**
(21) Application number: 25183594.8
(22) Date of filing: 18.06.2025
(51) Int. Cl.: F16H 47/02, F16H 61/468

(54) **HYDROSTATICALLY DRIVEN ROAD OPERATING MACHINE**

(30) Priority: 18.06.2024 IT 202400013900
(71) Applicant: DULEVO INTERNATIONAL S.p.A., 43012 Fontanellato (PR) (IT)
(72) Inventor: Digesù, Pasquale, Modena (IT); Catellani, Cristian, Parma (IT); Ferrari, Davide, Sorbolo (IT); Abati, Luigi, Poviglio (IT)
(74) Representative: Lunati & Mazzoni S.r.L.

(57) **Abstract**

A hydrostatically driven road operating machine is provided comprising one or more wheels and/or one or more axles adapted to enable its movement over a ground; a hydrostatic driven apparatus operatively connected to one or more wheels and/or one or more axles to control their movement; a mechanical braking system including a pedal accessible by a user and configured to generate a braking intensity proportional to a braking pressure applied by the user on the pedal; a mechanical transmission including a selection device configured to determine at least one inertial connecting configuration wherein the mechanical transmission operatively connects the driven apparatus and one or more wheels and/or one or more axles, and a free configuration wherein the mechanical transmission operatively disconnects the driven apparatus selectively from one or more wheels and/or one or more axles; control means comprising rotation sensors operatively connected to one or more wheels and configured to acquire a respective rotational speed; an ABS system configured to acquire a respective rotational speed of one or more wheels and to determine, when one or more wheels lock, a gradual reduction of braking intensity so as to prevent slipping; wherein the ABS system is independent of the driven apparatus, and the control means are configured to bring the selection device from the connecting configuration to the free configuration exclusively when the ABS system is in operation.

## Description

The present invention relates to a hydrostatically driven road operating machine of the type specified in the preamble of claim 1.

In particular, the present invention relates to a machine adapted to enable street cleaning wherein the drive is achieved by a hydrostatic transmission including at least one pump mechanically connected to an engine, preferably but not exclusively diesel.

As is known, hydrostatically driven road operating machines are characterised by a driven architecture which, normally, is combined with a traditional hydraulic braking system consisting of elements such as brake pump and hydraulic calipers or drums on the wheels.

The known technique described comprises some significant drawbacks.

In particular,
in fact, the braking system normally employed substantially brakes the four or more wheels in the same way regardless of the grip of each individual wheel.

Furthermore, the hydrostatic driven system inherently presents a certain inertial effect (hydraulic inertia) on the downstream motion transmission that requires a certain time to accelerate and to brake the wheels, similarly to what occurs with engine braking in a mechanical transmission with a clutch.

In particular, the hydrostatic transmission normally has both a driving function and a braking function, since the hydrostatic system is reversible. Therefore, in addition to the driving torque on the shaft, generated by the pressure of the pump moving the hydraulic motor (in forward rotation), a braking torque can be created, by reversing the flow in the hydraulic motor, between inlet and outlet, thereby dissipating the braking energy in the hydraulic system through a torque absorbed by the hydraulic motor (in reverse rotation).

The braking action of the hydrostatic system is in any case always present even when the hydraulic motor is placed in "neutral", since the oil pressure is generated on the discharge port due to the inertial drag of the axle mechanically connected to the hydraulic motor.

Therefore, when braking is desired, in the aforementioned systems the mechanical brakes must also brake the hydraulic resistant torque, which is created when the hydraulic oil pressure is quickly sent to discharge, which as stated results in a resistant torque.

To attempt to overcome the aforementioned drawbacks, in some cases a hydraulic ABS system can be installed on the vehicle that modulates the braking of the wheels or axles independently from one another, thus allowing to improve the deceleration of the vehicle according to the grip of each individual wheel or each individual axle. However, the hydraulic ABS system is rather uncommon on heavy or operating vehicles, due to the difficulty of tuning, the "rigidity" of hydraulics and the system pressures.

In this situation, the technical task underlying the present invention is to devise a hydrostatically driven road operating machine capable of substantially overcoming at least part of the mentioned drawbacks.

Within said technical task, an important object of the invention is to obtain a hydrostatically driven road operating machine that allows to effectively modulate the braking action on the wheels of the vehicle.

Another important object of the invention is to realise a hydrostatically driven road operating machine that allows to improve the deceleration of the vehicle according to the grip of each individual wheel or each individual axle in a simple, quick and dynamic way.

The technical task and the specified objects are achieved by a hydrostatically driven road operating machine as claimed in the annexed claim 1.

Preferred technical solutions are highlighted in the dependent claims.

In the present document, dimensions, values, shapes and geometrical references (such as perpendicularity and parallelism), when associated with words like "about" or other similar terms such as "approximately" or "substantially", are to be understood as allowing for measurement errors or inaccuracies due to production and/or manufacturing errors and, above all, allowing for a slight deviation from the value, dimension, shape or geometrical reference to which they are associated. For example, such terms, if associated with a value, preferably indicate a deviation not exceeding 10% of the value itself.

Furthermore, when used, terms such as "first", "second", "upper", "lower", "main" and "secondary" do not necessarily identify an order, a priority of relationship or relative position, but may be simply used to more clearly distinguish between different components.

Unless otherwise specified, as results from the following discussions, it is considered that terms such as "processing", "computing", "determining", "calculating", or similar, refer to the action and/or processes of a computer or similar electronic computing device that manipulates and/or transforms data represented as physical quantities, such as electronic quantities of registers of a computer system and/or memories into other data similarly represented as physical quantities within computer systems, registers or other devices for storing, transmitting or displaying information.

Unless otherwise indicated, the measurements and data reported in this text are to be considered as taken in International Standard Atmosphere ICAO (ISO 2533:1975).

In particular, preferably, the road operating machine is a type-approved machine of type N3. For example, the road operating machine is a machine capable of reaching a top speed of 80 km/h.

The machine therefore comprises one or more wheels, preferably a plurality of wheels. Alternatively or additionally, the machine comprises one or more axles, preferably a plurality of axles. The term axle refers to a group including a drive shaft having wheels at its ends whose movement is governed by the rotation of the shaft. Therefore, to move the machine, the motion can be transmitted directly to the wheels or to the shaft of the axle. Thus, wheels or axles enable the movement of the machine over a ground, preferably a road surface.

The machine therefore comprises a hydrostatic driven apparatus. The hydrostatic driven apparatus is operatively connected to one or more wheels and/or to one or more axles. Substantially, the force that moves the wheels is provided by a pressurised fluid, preferably consisting of oil.

Therefore, the hydrostatic driven apparatus is configured to actuate indirectly and to control the movement of the wheels and/or axles.

Preferably, the hydrostatic driven apparatus comprises at least one engine.

The engine is preferably of the internal combustion type, but it may also be electric motor. Furthermore, the driven apparatus preferably also comprises a pump, mechanically connected to the engine, which provides pressure to the fluid, preferably oil, to move the wheels and/or the axle.

Moreover, the driven apparatus includes a pump. This pump transforms the mechanical energy emitted by the engine into potential energy given by the pressurisation of the fluid. The pump is preferably of the variable displacement type, but could also be of the fixed displacement type.

If of the variable displacement type, the pump preferably also includes a tiltable plate.

The plate, as is known, has the function of being able to tilt so as to obtain a greater or smaller distance for each rotation of, for example, pistons, whereby a greater displacement corresponds to a greater flow while the pressure is defined by the downstream resistant torque, therefore by the torque required to overcome the driving resistance.

In particular, the tilting of the plate may also result in a reversal of driving action which entails a braking action of the engine torque, or a "neutral" situation in which the driving torque is substantially cancelled on wheels or axles and, in fact, the engine rotates freely without driving the wheels or axles.

In any case, the road operating machine also comprises a braking system.

The braking system is of the mechanical type. Furthermore, the braking system is operatively connected to one or more wheels and/or one or more axles. Thus, the braking system includes a pedal accessible by a user and configured to generate a braking intensity proportional to a braking pressure applied by the user on the pedal. In even greater detail, the pedal may define its own stroke. Therefore, the braking pressure may be manifested, on the pedal, as the position assumed by the pedal with respect to its stroke.

The machine also comprises a mechanical transmission.

The mechanical transmission mechanically connects one or more wheels and/or one or more axles to the driven apparatus.

Thus, the mechanical transmission is a portion adapted to determine the transmission of motion from the driven apparatus to the wheels and/or axles.

In particular, preferably, the mechanical transmission comprises at least one selection device. The selection device is, in general, configured to determine at least one inertial connecting configuration and one free configuration.

In the connecting configuration, the mechanical transmission operatively connects the driven apparatus and one or more wheels and/or one or more axles.

In the free configuration, the mechanical transmission operatively disconnects the driven apparatus selectively from one or more wheels and/or one or more axles.

It is important to note that when referring to operative connection or disconnection it is not meant that the mechanical transmission must necessarily mechanically bind or unbind the driven apparatus and one or more wheels and/or one or more axles, as would occur in a machine equipped with a clutch, but only that the mechanical drive may allow or not allow the transmission of drive from the driven apparatus to one or more wheels and/or one or more axles. Therefore, to achieve the free configuration, it is sufficient that the mechanical transmission does not transmit the motion of the driven apparatus to one or more wheels and/or one or more axles without the need to mechanically unbind the two components.

The free configuration could be selectively adopted independently axle by axle. The selection device could therefore include the tilting plate to vary the displacement of the engine so as to cancel the power transmitted from the driven apparatus to one or more wheels and/or one or more axles, possibly even all simultaneously.

In particular, especially but not exclusively in the latter case, when the selection device is in the free configuration, the engine moves idly with respect to the mechanical transmission.

The machine preferably also comprises control means.

The control means comprise at least rotation sensors. The rotation sensors are operatively connected to one or more wheels and configured to acquire a respective rotational speed of one or more wheels.

Furthermore, the control means may also include a position sensor configured to detect the position of the pedal with respect to the stroke so as to be able to determine the braking pressure and therefore the braking intensity.

The machine also comprises an ABS system.

The ABS system, which as known assists braking by preventing the wheels from slipping on the ground, is operatively connected to the braking system.

In the first instance, the ABS system is operatively connected to the control means, in particular to the rotation sensors. Therefore, in operational terms, the ABS system is configured to acquire a respective rotational speed of one or more wheels and to determine, when one or more wheels lock, a gradual reduction of braking intensity on the locked wheel so as to unlock it and prevent it from slipping during a movement of said machine.

Furthermore, the ABS system may also be configured to acquire the braking intensity and to determine, when the braking intensity exceeds a predetermined threshold value, a gradual reduction of the braking intensity.

As already mentioned, these measures allow modulating the braking of one or more wheels and/or one or more axles and prevent one or more rotational speeds from being cancelled, implying a slip of one or more wheels on the ground, during a movement of the machine.

Advantageously, the ABS system is not hydraulic. In fact, the ABS system is preferably independent of the driven apparatus. Moreover, it is preferably pneumatic.

Therefore, advantageously, the control means are also operatively connected to the selection device and configured to bring the selection device from the connecting configuration to the free configuration exclusively when the ABS system is in operation.

This means that the driven apparatus is operatively disconnected from wheels and/or axles whenever the ABS system intervenes in such a way that it cannot interfere with the proper functioning of the latter.

With regard to data transmission, preferably, the pressure intensity and/or the position of the pedal are processed in the control means as CAN signals.

The control means are therefore preferably of the electronic type.

In fact, the control means preferably comprise an electronic processor including at least two mutually distinct and independent discrete algorithms respectively configured to control the mechanical transmission and the ABS system.

Furthermore, the control means further comprise a general algorithm configured to control the driven apparatus and coordinate the discrete algorithms.

In such a system, therefore, there are no possibilities of interference between the various systems, which makes it possible to avoid disturbance actions of the driven system on the braking action of the machine.

Indeed, the hydrostatically driven road operating machine according to the invention achieves important advantages.

In particular, the hydrostatically driven road operating machine allows effective modulation of the braking action on the wheels of the vehicle.

Moreover, the hydrostatically driven road operating machine allows improving the deceleration of the vehicle according to the grip of each individual wheel or each individual axle in a simple, quick and dynamic manner.

In particular, the disturbance that may arise from the generation of a hydrostatic braking torque is cancelled when the ABS system is in operation, reducing the possibility of anomalies or other undesired behaviours during control of the machine. The invention is susceptible to variants falling within the scope of the inventive concept defined by the claims.

Within this scope all details may be replaced with equivalent elements and the materials, shapes and dimensions may be any.

## Claims

1. Hydrostatically driven road operating machine comprising:
- one or more wheels and/or one or more axles suitable for enabling the movement of said machine over a ground;
- a hydrostatic drive apparatus operatively connected to one or more of said wheels and/or one or more of said axles to control the movement of said wheels and/or said axles;
- a mechanical braking system operatively connected to one or more of said wheels and/or one or more of said axles and including a pedal accessible by a user and configured to generate a braking intensity proportional to a braking pressure imposed by said user on said pedal;
- a mechanical transmission mechanically connecting one or more of said wheels and/or one or more of said axles to said driven apparatus and including a selection device configured to determine at least:
- an inertial connecting configuration wherein said mechanical transmission operatively connects said driven apparatus and one or more of said wheels and/or one or more of said axles, and
- a free configuration wherein said mechanical transmission operatively disconnects said driven apparatus selectively from one or more of said wheels and/or one or more of said axles;
- control means comprising rotation sensors operatively connected to one or more of said wheels and configured to acquire a respective rotational speed of one or more of said wheels;
- an ABS system operatively connected to said control means and said braking system and configured to acquire a respective rotational speed of one or more of said wheels and to determine, when one or more of said wheels lock, a gradual reduction of said braking intensity on a said locked wheel so as to unlock it and prevent it from slipping during a movement of said machine;
**and characterised in that**
- said ABS system is independent of said driven apparatus, and
- said control means are operatively connected to said selection device and configured to bring said selector device from said connecting configuration to said free configuration exclusively when said ABS system is in operation.

2. Machine according to claim 1, wherein said ABS system is of the pneumatic type.

3. Machine according to any of the previous claims, wherein said ABS system is likewise configured to acquire said braking intensity and determine, when said braking intensity exceeds a predetermined threshold value, a gradual reduction of said braking intensity so as to modulate the braking of one or more of said wheels and/or one or more of said axles and prevent one or more of said rotational speeds from being cancelled, implying a slip of one or more of said wheels on said ground, during a movement of said machine, said control means being configured to bring said selection device from said connecting configuration to said free configuration when said braking intensity exceeds said predetermined threshold value.

4. Machine according to any of the previous claims, wherein said pedal defines its own stroke and said control means includes a position sensor configured to detect the position of said pedal with respect to said stroke, said braking pressure being proportional to said position of said pedal.

5. Machine according to any of the previous claims, wherein said control means include an electronic processor including at least two mutually distinct and independent discrete algorithms and configured to control said mechanical transmission and said ABS system, respectively.

6. Machine according to the previous claim, wherein said control means further comprise a general algorithm configured to control said driven apparatus and coordinate said discrete algorithms.

7. Machine according to any of the previous claims, wherein said driven apparatus includes a motor and a variable displacement pump, mechanically connected to said variable displacement motor, including a tiltiable plate and said selection device includes said tilting plate for varying the displacement of said motor.

8. Machine according to the previous claim, wherein said motor is of the endothermic diesel type.

9. Machine according to the previous claim, wherein said motor is of the electric type.

10. Machine according to any one of claims 7-9, wherein when said selection device is in said free configuration, said motor moves idly with respect to said mechanical transmission.
